(19) Europäisches Patentamt European Patent Office Office européen des brevets

(11) **EP 2 665 905 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
*F02D 41/00* (2006.01)     *F02D 35/02* (2006.01)
*F02D 19/02* (2006.01)

(21) Anmeldenummer: **11808555.4**

(22) Anmeldetag: **12.12.2011**

(86) Internationale Anmeldenummer:
**PCT/AT2011/000491**

(87) Internationale Veröffentlichungsnummer:
**WO 2012/097389 (26.07.2012 Gazette 2012/30)**

(54) **VERFAHREN ZUM BETREIBEN EINER ÜBER WENIGSTENS ZWEI ZYLINDER VERFÜGENDEN BRENNKRAFTMASCHINE**

METHOD FOR OPERATING AN INTERNAL COMBUSTION ENGINE HAVING AT LEAST TWO CYLINDERS

PROCÉDÉ POUR COMMANDER UN MOTEUR À COMBUSTION INTERNE COMPRENANT AU MOINS DEUX CYLINDRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2011 AT 662011**

(43) Veröffentlichungstag der Anmeldung:
**27.11.2013 Patentblatt 2013/48**

(73) Patentinhaber: **Innio Jenbacher GmbH & Co OG 6200 Jenbach (AT)**

(72) Erfinder:
• **HIRZINGER, Johann**
  **A-6345 Kössen (AT)**
• **KOPECEK, Herbert**
  **A-6130 Schwaz (AT)**
• **LU, Hang**
  **85356 Freising (DE)**
• **SPYRA, Nikolaus**
  **6020 Innsbruck (AT)**
• **WALDHART, Michael**
  **6410 Telfs (AT)**

(74) Vertreter: **Torggler & Hofinger Patentanwälte Postfach 85 6010 Innsbruck (AT)**

(56) Entgegenhaltungen:
EP-A2- 1 225 321     EP-A2- 1 281 851
DE-A1- 19 718 899    DE-A1- 19 754 353
DE-A1- 19 814 643    US-A1- 2010 131 172
US-B1- 6 354 268

EP 2 665 905 B1

**Beschreibung**

Die Erfindung betrifft ein Verfahren zum Betreiben einer über wenigstens zwei Zylinder verfügenden Brennkraftmaschine, insbesondere Gasmotor. Weiters betrifft die Erfindung eine Brennkraftmaschine zur Durchführung eines betreffenden Verfahrens.

Verfahren zum Betreiben von Brennkraftmaschinen mit mehreren Zylindern sind bereits bekannt. Die im Stand der Technik beschriebenen Verfahren und Regelsysteme zum Betreiben von Brennkraftmaschinen (z. B. DE 196 21 297 C1, EP 1 688 601 A2, DE 10 2006 024 956 B4, DE 10 2007 000 443 A1) sind vorrangig zur Motorregelung von kleineren Otto- und Dieselmotoren geeignet, wie sie beispielsweise zum Betrieb von PKW verwendet werden. Daher beziehen sich die darin angeführten Beispiele im Allgemeinen auf die Verwendung flüssiger Kraftstoffe.

Für stationäre Gasmotoren mit Motorleistungen über 3 MW, welche beispielsweise zur Erzeugung von Energie verwendet werden, sind die vorgeschlagenen Regelkonzepte nicht geeignet, da es durch die physisch großen Abmessungen dieser Motoren (beispielsweise der Gemischrails) zu einem unerwünscht großen Zeitverzug zwischen dem Regelsignal und der Wirkung auf den Verbrennungsvorgang im entsprechenden Zylinder kommt. Zudem liegt bei den gegebenen Abmessungen bei gemischaufgeladenen Motoren nicht an allen Zylindern der gleiche Druck an bzw. kann der Druck aufgrund von Strömungseffekten nicht korrekt erfasst werden.

Die JP 2005-069097, die DE 198 14 643 A1 und die EP 2 136 059 A1 zeigen jeweils einen Gasmotor mit mehreren Zylindern, wobei der Zylinderdruck eines Zylinders mithilfe eines Zylinderdrucksensors ermittelt werden kann.

Aufgabe der Erfindung ist es, ein Verfahren bereitzustellen, mit dem die Leistung einer Brennkraftmaschine, im Speziellen eines Gasmotors, präzise und schnell geregelt werden kann. Dies gilt insbesondere für den sogenannten Inselbetrieb, bei dem der Gasmotor auf einen schwankenden Leistungsbedarf des zu versorgenden Stromnetzes reagieren muss. Hierbei ist eine schnelle und präzise Regelung der abzugebenden Leistung des Gasmotors erforderlich.

Diese Aufgabe wird erfindungsgemäß dadurch gelöst, dass in Abhängigkeit einer gewünschten Leistung und/oder eines gewünschten Drehmoments und/oder einer gewünschten Drehzahl der Brennkraftmaschine die jedem der wenigstens zwei Zylinder zugeführte Menge an Brennstoff zylinderindividuell mithilfe einer Brennstoffdosiereinrichtung und eines Zylinderdrucksensors gesteuert oder geregelt wird.

Im Folgenden werden jeweils die Begriffe Brennstoff, Treibgas und Gas sowie die Begriffe Brennkraftmaschine, Gasmotor und Motor synonym verwendet.

Als Führungsgröße zum Steuern oder Regeln der Leistung und/oder des Drehmoments und/oder der Drehzahl der Brennkraftmaschine wird hierbei der Druck in jedem der Zylinder verwendet. Dabei wird der Druck im Verbrennungsraum über Zylinderdrucksensoren erfasst. Die vom jeweiligen Zylinder verrichtete Arbeit bzw. abgegebene Leistung kann über bekannte thermodynamische Zusammenhänge aus dem gemessenen Zylinderdruck berechnet werden. Die Leistung wird dabei primär von der für den Verbrennungsvorgang zur Verfügung stehenden Brennstoffmenge (Menge an Treibgas) beeinflusst. Aus bekannten bzw. zu erfassenden Parametern wie z.B. Druck im Verbrennungsraum, Druck und Temperatur der anliegenden Luft, Druck und Temperatur des anliegenden Treibgases und Drehzahl wird die zum Erreichen der geforderten Leistung beim nächsten Verbrennungsvorgang notwendige Gasmenge errechnet und diese entsprechende Menge an Brennstoff oder Brennstoff-Luft-Gemisch über entsprechende Einbringvorrichtungen den Zylindern der Brennkraftmaschine zugeführt.

Dabei kann jedem der wenigstens zwei Zylinder verdichtete Luft und Brennstoff, vorzugsweise Treibgas, jeweils in gesonderter Form zugeführt werden. Selbstverständlich kann jedoch auch eine Vormischung erfolgen und ein entsprechendes Brennstoff-Luft-Gemisch zugeführt werden.

Bei einer weiteren Ausführungsform der Erfindung kann diese so ausgeführt sein, dass die Zylinder abhängig vom jeweiligen Zylinderdruck, vorzugsweise Zylinderspitzendruck, bzw. davon abgeleiteter Größen in Bezug auf die von den Zylindern abgegebene Leistung und/oder Emissionen, vorzugsweise NOx-Emissionen, gleichgestellt werden. Unterschiedliche Geometrien im Luftansaugkanal sowie in der Gasleitung als auch unterschiedliche Ventilcharakteristika können zu ungleichen Verbrennungsvorgängen in den einzelnen Zylindern führen. Hierbei ist es vorteilhaft, die Verbrennung in den unterschiedlichen Zylindern in Bezug auf Leistungsausbeute oder NOx-Emissionen mit geeigneten Mitteln gleichzustellen. Hierzu lassen sich aus den Zylinderdrucksignalen Größen wie Spitzendruck oder Verbrennungsschwerpunkt bestimmen, die zur Gleichstellung herangezogen werden können. Auch wäre möglich, aus diesen druckindizierten Größen für die Verbrennung wichtige Parameter wie die Luftüberschusszahl abzuleiten, die dann ebenfalls zur Gleichstellung oder zur generellen Motorregelung verwendet werden können. Eine Zylindergleichstellung kann dabei über eine zylinderindividuelle Steuerung oder Regelung des Zündzeitpunkts und/oder der Öffnungsdauer und/oder des Brennstoffversorgungsdrucks der jeweiligen Einbringvorrichtung für den Brennstoff herbeigeführt werden. Als Führungsgröße für eine Zylindergleichstellungsregelung kann vorzugsweise der Zylinderspitzendruck oder der Zylindermitteldruck oder die aus dem Zylinderdruckverlauf ermittelte zylinderindividuelle Luftüberschusszahl dienen.

In einer bevorzugten Ausführungsform der Erfindung kann vorgesehen sein, dass die jedem der wenigstens zwei Zylinder zugeführte Menge an Brennstoff durch die Öffnungsdauer und/oder durch den Brennstoffversorgungsdruck und/oder durch den Öffnungsquerschnitt der jeweiligen Einbringvorrichtung für den Brennstoff festgelegt wird. Dabei können die Brennstoffmenge und die Zuführcharakteristik über den jeweiligen Öffnungs- und Schließzeitpunkt der Einbringvorrichtung eines Zylinders bestimmt werden. Die Einbringvorrichtungen können dabei als Port-Injection-Ventile ausgeführt sein, wobei die jeweilige Öffnungsdauer eines solchen Port-Injection-Ventils nach den Eigenschaften des Ventils und nach den Betriebsbedingungen ermittelt werden kann. Die Einbringvorrichtung kann dabei so ausgeführt sein, dass diese im Wesentlichen nur die beiden Stellungen vollständig geöffnet und vollständig geschlossen aufweisen kann.

Die Menge an Brennstoff bzw. Treibgas, die einem Gasmotor zugeführt wird, ist der primäre Einflussfaktor für die vom Gasmotor abgebbare Leistung. Die Gasmengendosierung an einem Port-Injection-Ventil stellt damit ein primäres Regelorgan für die Leistung dar. Dabei ist folgender Zusammenhang von Bedeutung:

$$P_{mech} = \frac{m_{gas} \cdot Hu \cdot \eta_{mot}}{\frac{120}{n}}$$

wobei $P_{mech}$ die abgegebene Leistung der Brennkraftmaschine, $m_{gas}$ die dafür benötigte Gasmenge für die gesamte Brennkraftmaschine, Hu der untere Heizwert des Gases, $\eta_{mot}$ der Wirkungsgrad der Brennkraftmaschine und n die Drehzahl der Brennkraftmaschine in rpm ist.

Da die Gasmenge $m_{gas}$ primär Motorleistung, Drehmoment oder Drehzahl der Brennkraftmaschine beeinflusst, kann der Sollwert der in den Gasmotor eingeblasenen Gasmenge gemäß dem gewünschten Sollwert der Regelgröße berechnet werden.

Die Brennstoffmenge $m_{gas}$ für eine gewünschte Leistung $P_{soll}$ kann dementsprechend durch folgende Formel ermittelt werden:

$$m_{gas} = \frac{P_{soll} \cdot \frac{120}{n}}{Hu \cdot \eta_{mot}}$$

In die Berechnung fließen der untere Heizwert Hu des Gases, der Motorwirkungsgrad $\eta_{mot}$ und die Drehzahl n des Motors ein. Der Wirkungsgrad der Brennkraftmaschine $\eta_{mot}$ kann dabei jeweils durch Auswertung des Zylinderdruckverlaufs während des letzten Verbrennungszyklus oder beispielsweise aus einer Motorkennlinie ermittelt werden.

Hinsichtlich der Abgasregelung und Zündungsregelung darf das Gemischverhältnis des Brennstoff-Luft-Gemisches nicht auf einen beliebigen Wert gesetzt werden. Das Gemischverhältnis (Lambdawert) muss dabei so eingestellt werden, dass die Emissionen niedriger als eine definierte Emissionsgrenze sind und gleichzeitig die Verbrennungsaussetzergrenze nicht erreicht wird. Der entsprechende Lambdawert wird dabei z.B. durch eine entsprechende Verbrennungsregelung oder durch eine Kennlinie oder Tabelle angegeben. Mit dem angegebenen Lambdawert wird die Brennstoffmenge einer entsprechenden Luftmenge für den ganzen Motor ermittelt. Dabei kann ein Zylinder nur eine bestimmte Luftmenge erhalten. Die Luftmenge, die in einen Zylinder eingefüllt werden kann, ist eine Funktion von Ladedruck und Liefergrad.

In der Regeleinrichtung kann die Zylinderluftmenge durch den permanent gemessenen Ladedruck und den kalkulierten Liefergrad bestimmt werden. Abhängig von der für eine gewünschte Leistung benötigten Gasmenge kann dann eine entsprechende Zylinderanzahl bestimmt werden, in denen sich das Gas gleichmäßig verteilen kann. In den aktiven, also mit Gas zu versorgenden, Zylindern wird das Gas durch entsprechende Einbringvorrichtungen, beispielsweise Port-Injection-Ventile eingeblasen. Die Öffnungsdauer eines Ventils entscheidet dabei, wie viel Gasmenge in einen Zylinder eingedüst wird. Die Öffnungsdauern der Ventile können von der Regeleinrichtung als Stellgröße geliefert werden. Der Istwert der Motorleistung kann dabei durch Erfassung des Zylinderdruckverlaufs (Zylinderdruckindizierung) oder durch Messung der elektrischen Leistung im Netzparallelbetrieb bestimmt werden und von der Regeleinrichtung als Rückkopplungssignal bzw. Führungsgröße verwendet werden.

Dabei kann auch ein zeitlich gestaffeltes Regelungskonzept zum Einsatz kommen. Erfindungsgemäß ist es vorgesehen, dass in einem ersten Regelzyklus im Bereich von etwa 2 bis 100 Verbrennungszyklen eine Regelung der Brennstoffmenge je Zylinder erfolgt und in einem zweiten Regelzyklus im Bereich von etwa 10 bis 1000 Verbrennungszyklen eine Regelung dadurch erfolgt, dass die Brennstoffmenge einer geregelten Ladeluftmenge nachgeführt wird und in einem dritten Regelzyklus im Bereich von etwa 100 bis 10000 Verbrennungszyklen eine Regelung des Brennstoffversorgungsdrucks je Zylinder erfolgt.

Dadurch kann eine zeitliche Abfolge von Regeleingriffen definiert werden, wobei die Zeitdauern über die Anzahl von Verbrennungszyklen, über die der Eingriff erfolgt, festgelegt werden. Der erste Regelzyklus, der im Bereich von 2 bis 100 Verbrennungszyklen zum Einsatz kommt, dient dabei der reinen Leistungsregelung und wird als gasgeführtes Regelungsprinzip bezeichnet. Dabei stellt die Vorgabe der Gasmenge den primären Regeleingriff dar, wobei ein sekundärer Regeleingriff dadurch erfolgen kann, dass die notwendige Ladeluftmenge entsprechend der Gasmenge adaptiert wird. Ein solcher Regeleingriff eignet sich besonders für eine kurzfristige Leistungsregelung, bei der hochdynamische Eingriffe (z.B. zyklusbasierte Überwachungen, Drehzahlabweichungen) durch zyklussynchrone, direkte Eingriffe in die Gasmenge bewerkstelligt werden können. Weiters eignet sich ein solcher Regeleingriff insbesondere zu einer raschen Erzielung einer Zylindergleichstellung.

Eine reine kurzfristige Leistungsregelung hat jedoch den Nachteil, dass damit veränderte Betriebsbedingungen, wie z.B. eine veränderte Gaszusammensetzung, brennwertschwache Gase, Verschleiß, hohe Außentemperaturen etc. nicht berücksichtigt werden können. Daher können weitere längerfristigere Regelzyklen vorgesehen sein, durch die neben der Möglichkeit der kurzfristigen gasgeführten Regelung beispielsweise zur Behebung kurzfristiger Störungen auch längerfristigere Regeleingriffe zur Beibehaltung eines hohen Wirkungsgrades und/oder günstiger Emissionsentwicklungen möglich sind.

In einem zweiten Regelzyklus kann daher vorgesehen sein, dass die Ladeluftmenge als primärer Regeleingriff genutzt wird und die entsprechende Brennstoffmenge der Ladeluftmenge nachgeführt wird (luftgeführtes Regelungsprinzip). Dieses Regelungsprinzip eignet sich insbesondere zur Leistungsregelung und zur Regelung quasistationärer Vorgänge, wie z.B. das Hochfahren eines Gasmotors bis zu seiner Nennlast.

Als übergeordnet stationär bezeichenbare Vorgänge können in einem dritten Regelzyklus durch die Anpassung des Brennstoffversorgungsdrucks kontrolliert werden (gasdruckgeführtes Regelungsprinzip), wobei Optimierungsvorgänge dabei wiederum durch Adaption der Gasmenge mit geringem zeitlichen Anspruch entsprechend dem ersten Regelzyklus erfolgen können.

Gemäß einer besonders bevorzugten Ausführungsform kann vorgesehen sein, dass durch die Regelung bzw. Steuerung gezielt einzelne Zylinder abgeschaltet werden, wobei die nicht abgeschalteten Zylinder die gewünschte Leistung abgeben und/oder das gewünschte Drehmoment und/oder die gewünschte Drehzahl der Brennkraftmaschine zur Verfügung stellen. Vorzugsweise kann dabei vorgesehen sein, dass bei einer Leistungsanforderung der Brennkraftmaschine im Bereich von 0% bis 30% der Nennleistung der Brennkraftmaschine einzelne Zylinder abgeschaltet werden. Eine Leistungs- bzw. Drehzahlregelung im Teillastfall und Leerlauf kann dabei durch Abstellung bzw. Zuschaltung einzelner Zylinder erfolgen anstatt mithilfe üblicher Stellglieder wie Umblaseventil oder Drosselklappe. Dadurch ergibt sich ein drosselklappenfreier und damit verlustärmerer Betrieb und eine einfachere Regelcharakteristik für die gesamte Brennkraftmaschine, im Speziellen bezogen auf eine Turboladerregelung. Eine Zylinderabschaltung bei Lastabwurf kann natürlich auch generell im gesamten Lastbereich, von 0% bis 100% der Nennleistung der Brennkraftmaschine, erfolgen.

Abhängig von der aktuellen Lastsituation kann also vorgesehen sein, dass bei einer Absenkung bzw. Zunahme der Last um mehr als 25% der Nennlast pro Verbrennungszyklus selektiv einzelne Zylinder ab- bzw. zugeschaltet werden. Wird eine Brennkraftmaschine beispielsweise für die Energieerzeugung eingesetzt, können Sensorwerte, die den Netzzustand charakterisieren (z.B. Netzspannung, Frequenz, Energieanforderungsprofile des Energieversorgers) verwendet werden, um Lastsprünge im Vorfeld zu erkennen und kurzfristig darauf reagieren zu können. Befindet sich die Brennkraftmaschine in einem Inselbetrieb, so können dafür Messwerte auf Seiten der elektrischen Last erfasst werden (z. B. Verbraucheranforderung, Windgeschwindigkeitsmessungen oder Solarintensitätsmessungen). Wird die Brennkraftmaschine als Antrieb für z.B. Pumpen oder Kompressoren verwendet, so können beispielsweise Messungen an einem in der Brennkraftmaschine vorgesehenen Luftverdichter (z.B. Verdichtereinlassdruck, Verdichterauslassdruck) dazu verwendet werden, um Lastauf- bzw. -abschaltungen oder auch kurze Laststöße schnell erfassen zu können. Auch Drehmoment- und/oder Drehzahlmessungen können zur Erfassung von Laständerungen herangezogen werden.

Im Falle einer Lastaufschaltung können mit Hilfe der individuellen Gaseindüsung einzelne Zylinder oder auch alle Zylinder während der transienten Phase mit einem angefetteten Brennstoff-Luft-Gemisch versorgt werden, um einem in der Brennkraftmaschine vorgesehenen Abgasturbolader kurzzeitig mehr Leistung zur Verfügung zu stellen und damit den bekannten Turboloch-Effekt schneller überwinden zu können. Dabei kann gleichzeitig auch der Zündzeitpunkt entsprechend verschoben werden, um Klopfen zu vermeiden.

Die Möglichkeit, die Versorgung mit Brenngas zylinderindividuell zu steuern bzw. zu unterbinden, kann auch dazu verwendet werden, das Gas kurzzeitig (z.B. für ein bis zwei Verbrennungszyklen) abzuschalten, um die reine Verdichtungskurve zu erfassen und daraus eventuelle Ventilschäden oder Verschleiß, beispielsweise von einem Einlass- und/oder Auslassventil eines Zylinders, detektieren zu können. Daher kann vorgesehen sein, dass zur Funktionsüberwachung eines Zylinders die Brennstoffversorgung für einen oder mehrere Verbrennungszyklen, vorzugsweise ein bis zwei Verbrennungszyklen, abgeschaltet und der sich dabei ergebende zeitliche Verlauf des Zylinderdrucks ermittelt wird. Eine Phase ohne Verbrennung kann auch dazu verwendet werden, um die Zylinderdrucksensoren abzugleichen. Ein solcher Abgleich kann notwendig sein, um Parameter wie z.B. die Verbrennungsschwerpunktlage mit einer ausreichenden Genauigkeit aus den Zylinderdrucksignalen berechnen zu können. Auch können Ventilverschleiß oder Ablagerungen, die zu einer Änderung des Kompressionsverhältnisses führen, über die Bestimmung des Pumpmitteldrucks bzw. entsprechende Pumpverluste während einer solchen Phase erkannt werden. Werden hierbei die Werte mehrerer Sensoren miteinander verglichen, so können u. a. Sensordefekte von echtem Fehlverhalten der Brennkraftmaschine unterschieden werden.

Besonders vorteilhaft ist jene Ausführungsform der Erfindung, bei der die jeweiligen Verbrennungsvorgänge der wenigstens zwei Zylinder durch eine Zylindersensorik, vorzugsweise Zylinderdruckindizierung, überwacht werden. Die sogenannte Zylinderdruckindizierung dient zur Erfassung des im Zylinder herrschenden Innendrucks in Abhängigkeit von Kurbelwellenwinkel oder der Zeit. Insbesondere in Verbindung mit weiteren Messgrößen, wie beispielsweise die Abgastemperatur beim Zylinderauslass oder das Drehmoment, kann ermittelt werden, ob die Verbrennung in einem Zylinder tatsächlich von den restlichen Zylindern abweicht oder ob beispielsweise der Zylinderdrucksensor des betreffenden Zylinders defekt ist. Darüber hinaus können mithilfe einer Zylinderdruckindizierung die Überwachung verbrennungstechnischer, zyklusbasierter Grenzen wie etwa Klopfen oder ein Aussetzerbetrieb sowie die Optimierung über mehrere Zyklen und die Überwachung und Reaktion auf schwankende Gasqualität ermöglicht werden. Dazu können rechnerisch aus dem Zylinderdruck ermittelte Größe wie beispielsweise der Verbrennungsschwerpunkt und der Mitteldruck verwendet werden.

Weiters kann vorgesehen sein, dass die wenigstens zwei Zylinder mit unterschiedlichen Brennstoffen betrieben werden. Dabei können beispielsweise einzelne Zylinder mit Diesel betrieben werden. Ein solcher gemischter Betrieb kann von Vorteil sein, um mit den dieselbetriebenen Zylindern aufgrund ihres breiteren Verbrennungsfensters bei Bedarf die Turbinenleistung und damit die Aufladung besser dynamisch regeln zu können. Die gasbetriebenen Zylinder arbeiten dabei im Wesentlichen konstant und werden beispielsweise nur für langsame Regeleingriffe herangezogen (z.B. NOx-Regelung).

Die der vorliegenden Erfindung zugrunde liegenden Aufgaben werden auch durch eine Brennkraftmaschine mit den Merkmalen des Anspruchs 14 gelöst. Vorteilhafte Weiterbildungen dieser Brennkraftmaschine sind durch die davon abhängigen Ansprüche dargelegt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:

Fig. 1     eine schematische Darstellung eines Zylinders mit Einbringvorrichtung und Zylinderdrucksensor und

Fig. 2     ein schematisches Blockschaltbild eines vorgeschlagenen Regelungskonzepts.

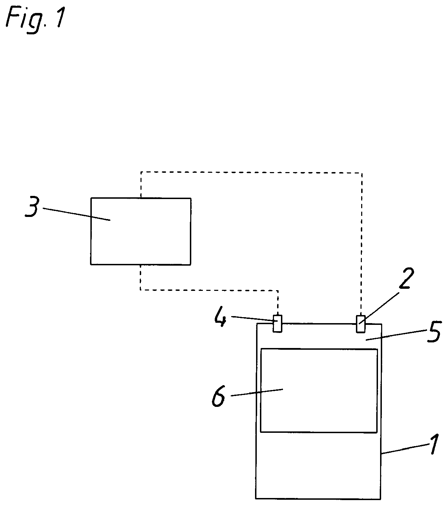

Fig. 1 zeigt schematisch einen Zylinder 1 einer Brennkraftmaschine mit einem darin befindlichen Kolben 6. Eine Einbringvorrichtung 4 dient dabei zum Eindüsen von Treibgas in den Verbrennungsraum 5. Ein Zylinderdrucksensor 2 liefert beispielsweise kontinuierlich oder zeitdiskret und/oder abhängig vom Winkel einer mit dem Kolben 6 verbundenen Kurbelwelle (hier nicht gezeigt) entsprechende Messdaten des Drucks im Verbrennungsraum 5 des Zylinders 1 an eine Steuer- oder Regeleinrichtung 3, welche zum Steuern oder Regeln von Leistung und/oder Drehmoment und/oder Drehzahl der Brennkraftmaschine dient. Abhängig von der gewünschten Regelgröße wird durch die Steuer- oder Regeleinrichtung 3 eine entsprechende Menge an Brennstoff für den Zylinder 1 dosiert und mittels Einbringvorrichtung 4 in den Verbrennungsraum 5 eingedüst. Somit übernimmt in diesem Beispiel die Steuer- oder Regeleinrichtung 3 gemeinsam mit der Einbringvorrichtung 4 die Funktion einer Brennstoffdosiereinrichtung.

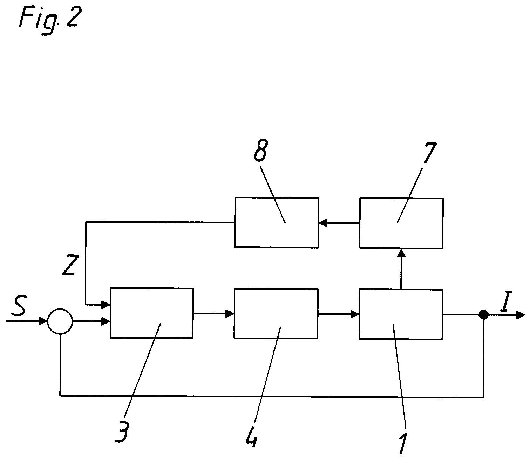

Fig. 2 zeigt ein schematisches Blockschaltbild eines vorgeschlagenen, gasgeführten Regelungskonzepts durch eine Steuer- oder Regeleinrichtung 3 zur Regelung der Brennstoffmenge für einen Zylinder 1 in Abhängigkeit der gewünschten Sollgröße S.

Die Sollgröße S und die Istgröße 1 können dabei die Motorleistung, das Drehmoment oder z.B. die Drehzahl betreffen. Im Zylinder 1 wird der Zylinderdruckverlauf durch wenigstens einen, hier nicht gezeigten, Zylinderdrucksensor 2 detektiert und von einer Zylinderdruckindizierungsvorrichtung 7 ausgewertet. Durch eine solche Zylinderdruckindizierung kann der Zylinderdruck in Abhängigkeit von der Zeit und/oder des Winkels einer mit dem Kolben 6 des Zylinders 1 verbundenen Kurbelwelle (hier nicht gezeigt) erfasst werden. Basierend auf dem Zylinderdruckverlauf, der von der Zylinderdruckindizierungsvorrichtung 7 einer Auswertungseinrichtung 8 bereitgestellt wird, können durch die Auswertungseinrichtung 8 relevante Parameter wie z.B. die Motorleistung, der Motorwirkungsgrad, der Liefergrad, der aktuelle Lambdawert und der Zylinderspitzendruck ermittelt werden. Eine oder mehrere dieser ermittelten Zusatzdaten Z können der Steuer- oder Regeleinrichtung 3 zugeführt werden, um beispielsweise die Anzahl der mit Brennstoff zu versorgenden Zylinder und die Öffnungsdauern der Einbringvorrichtungen 4 (z.B. Port-Injection-Ventile) zu bestimmen. Durch die Einbringvorrichtung 4 kann dann die entsprechend erforderliche Brennstoffmenge in den jeweiligen Zylinder 1 eingeblasen werden.

**Patentansprüche**

1.     Verfahren zum Betreiben einer über wenigstens zwei Zylinder (1) verfügenden Brennkraftmaschine, insbesondere Gasmotor, wobei in Abhängigkeit einer gewünschten Leistung und/oder eines gewünschten Drehmoments und/oder einer gewünschten Drehzahl der Brennkraftmaschine die jedem der wenigstens zwei Zylinder (1) zugeführte Menge an Brennstoff zylinderindividuell mithilfe einer Brennstoffdosiereinrichtung und eines Zylinderdrucksensors (2) gesteuert oder geregelt wird, **dadurch gekennzeichnet, dass**

    - in einem ersten Regelzyklus im Bereich von etwa 2 bis 100 Verbrennungszyklen eine Regelung der Brennstoffmenge je Zylinder (1) erfolgt und

- in einem zweiten Regelzyklus im Bereich von etwa 10 bis 1000 Verbrennungszyklen eine Regelung dadurch erfolgt, dass die Brennstoffmenge einer geregelten Ladeluftmenge nachgeführt wird und

- in einem dritten Regelzyklus im Bereich von etwa 100 bis 10000 Verbrennungszyklen eine Regelung des Brennstoffversorgungsdrucks je Zylinder (1) erfolgt.

2. Verfahren nach Anspruch 1, **dadurch gekennzeichnet, dass** jedem der wenigstens zwei Zylinder (1) verdichtete Luft und Brennstoff, vorzugsweise Treibgas, jeweils in gesonderter Form zugeführt werden.

3. Verfahren nach Anspruch 1 oder 2, **dadurch gekennzeichnet, dass** als Führungsgröße zum Steuern oder Regeln der Leistung und/oder des Drehmoments und/oder der Drehzahl der Brennkraftmaschine der Druck in jedem der Zylinder (1) verwendet wird.

4. Verfahren nach einem der Ansprüche 1 bis 3, **dadurch gekennzeichnet, dass** die jedem der wenigstens zwei Zylinder (1) zugeführte Menge an Brennstoff durch die Öffnungsdauer und/oder durch den Brennstoffversorgungsdruck und/oder durch den Öffnungsquerschnitt der jeweiligen Einbringvorrichtung (4) für den Brennstoff festgelegt wird.

5. Verfahren nach einem der Ansprüche 1 bis 4, **dadurch gekennzeichnet, dass** eine Zylindergleichstellung über eine zylinderindividuelle Steuerung oder Regelung des Zündzeitpunkts und/oder der Öffnungsdauer und/oder des Brennstoffversorgungsdrucks der jeweiligen Einbringvorrichtung (4) für den Brennstoff herbeigeführt wird, wobei vorzugsweise die Zylinder (1) abhängig vom jeweiligen Zylinderdruck, vorzugsweise Zylinderspitzendruck, bzw. davon abgeleiteter Größen in Bezug auf die von den Zylindern (1) abgegebene Leistung und/oder Emissionen, vorzugsweise NOx-Emissionen, gleichgestellt werden.

6. Verfahren nach einem der Ansprüche 1 bis 5, **dadurch gekennzeichnet, dass** durch die Steuerung gezielt einzelne Zylinder (1) abgeschaltet werden, wobei die nicht abgeschalteten Zylinder (1) die gewünschte Leistung abgeben und/oder das gewünschte Drehmoment und/oder die gewünschte Drehzahl der Brennkraftmaschine zur Verfügung stellen.

7. Verfahren nach Anspruch 6, **dadurch gekennzeichnet, dass** bei einer Leistungsanforderung der Brennkraftmaschine im Bereich von 0% bis 30% der Nennleistung der Brennkraftmaschine einzelne Zylinder (1) abgeschaltet werden.

8. Verfahren nach Anspruch 6 oder 7, **dadurch gekennzeichnet, dass** bei einer Absenkung bzw. Zunahme der Last um mehr als 25% der Nennlast pro Verbrennungszyklus selektiv einzelne Zylinder (1) ab- bzw. zugeschaltet werden.

9. Verfahren nach einem der Ansprüche 1 bis 8, **dadurch gekennzeichnet, dass** zur Funktionsüberwachung eines Zylinders (1) die Brennstoffversorgung für einen oder mehrere Verbrennungszyklen, vorzugsweise ein bis zwei Verbrennungszyklen, abgeschaltet und der sich dabei ergebende zeitliche Verlauf des Zylinderdrucks ermittelt wird.

10. Verfahren nach einem der Ansprüche 1 bis 9, **dadurch gekennzeichnet, dass** zur Funktionsüberwachung eines Ventils eines Zylinders (1) die Brennstoffversorgung für einen oder mehrere Verbrennungszyklen, vorzugsweise ein bis zwei Verbrennungszyklen, abgeschaltet wird, wobei die Verdichtungskurve erfasst wird und daraus ein eventueller Ventilschaden oder Ventilverschleiß detektiert wird.

11. Verfahren nach einem der Ansprüche 1 bis 10, **dadurch gekennzeichnet, dass** die jeweiligen Verbrennungsvorgänge der wenigstens zwei Zylinder (1) durch eine Zylindersensorik, vorzugsweise Zylinderdruckindizierung, überwacht werden.

12. Verfahren nach einem der Ansprüche 1 bis 11, **dadurch gekennzeichnet, dass** die wenigstens zwei Zylinder (1) mit unterschiedlichen Brennstoffen betrieben werden.

13. Brennkraftmaschine, insbesondere stationärer Gasmotor, mit:

   - wenigstens zwei Zylindern (1),
   - wenigstens einer Einbringvorrichtung (4) pro Zylinder (1), zur Einbringung von Brennstoff oder einem Brennstoff/Luft-Gemisch in den Zylinder (1), wobei vorzugsweise die wenigstens eine Einbringvorrichtung (4) pro Zylinder (1) als Port-Injection-Einrichtung ausgebildet ist, und
   - einer Steuer- oder Regeleinrichtung (3) zum Steuern oder Regeln wenigstens einer der folgenden gewünschten Größen der Brennkraftmaschine: Leistung, Drehmoment, Drehzahl,

wobei pro Zylinder (1) wenigstens ein Zylinderdrucksensor (2) vorgesehen ist, dessen Signale der Steuer- oder Regeleinrichtung (3) zugeführt werden und wobei jede der wenigstens einen Einbringvorrichtungen (4) pro Zylinder (1) durch die Steuer- oder Regeleinrichtung (3) zum Steuern oder Regeln der gewünschten Größe angesteuert werden, wobei die Brennkraftmaschine ohne Drosselklappe, mit mindestens einem Turboladerverdichterbypass und/oder mindestens einem Turboladerturbinenwastegate und/oder einer variablen Ventilsteuerung und/oder einer variablen Turbinengeometrie und/oder einer variablen Kompressorgeometrie ausgebildet ist, **dadurch gekennzeichnet, dass** die Steuer- oder Regeleinrichtung (3) dazu ausgebildet ist,

- in einem ersten Regelzyklus im Bereich von etwa 2 bis 100 Verbrennungszyklen eine Regelung der Brennstoffmenge je Zylinder (1) durchzuführen und
- in einem zweiten Regelzyklus im Bereich von etwa 10 bis 1000 Verbrennungszyklen eine Regelung dadurch durchzuführen, dass die Brennstoffmenge einer geregelten Ladeluftmenge nachgeführt wird und
- in einem dritten Regelzyklus im Bereich von etwa 100 bis 10000 Verbrennungszyklen eine Regelung des Brennstoffversorgungsdrucks je Zylinder (1) durchzuführen.

**14.** Brennkraftmaschine nach Anspruch 13, **dadurch gekennzeichnet, dass** ein Luftverdichter vorgesehen ist, der mit den wenigstens zwei Zylindern (1) in Verbindung steht.

**Claims**

**1.** A method of operating an internal combustion engine having at least two cylinders (1), in particular a gas engine, wherein in dependence on a desired power and/or a desired torque and/or a desired rotary speed of the internal combustion engine the amount of fuel supplied to each of the at least two cylinders (1) is controlled or regulated in cylinder-individual relationship by means of a fuel metering device and a cylinder pressure sensor (2), **characterised in, that**

- regulation of the amount of fuel per cylinder (1) is effected in a first regulating cycle in the region of between about 2 and 100 combustion cycles, and
- in a second regulating cycle in the region of between about 10 and 1000 combustion cycles regulation is effected by the amount of fuel being adjusted in tracking relationship with the regulated amount of charging air, and
- in a third regulating cycle in the region of between about 100 and 10,000 combustion cycles regulation of the fuel supply pressure is effected per cylinder (1).

**2.** A method as set forth in claim 1 **characterised in that** compressed air and fuel, preferably fuel gas, are respectively supplied in separate form to each of the at least two cylinders (1).

**3.** A method as set forth in claim 1 or claim 2 **characterised in that** the pressure in each of the cylinders (1) is used as a management value for controlling or regulating the power and/or the torque and/or the rotary speed of the internal combustion engine.

**4.** A method as set forth in one of claims 1 through 3 **characterised in that** the amount of fuel fed to each of the at least two cylinders (1) is established by the opening duration and/or by the fuel supply pressure and/or by the opening cross-section of the respective introduction device (4) for the fuel.

**5.** A method as set forth in one of claims 1 through 4 **characterised in that** a cylinder synchronisation is brought about by way of cylinder-individual control or regulation of the ignition time and/or the opening duration and/or the fuel supply pressure of the respective introduction device (4) for the fuel, wherein preferably the cylinders (1) are synchronised in dependence on the respective cylinder pressure, preferably cylinder peak pressure, or values derived therefrom in relation to the power delivered by the cylinders (1) and/or emission levels, preferably NOx-emission levels.

**6.** A method as set forth in one of claims 1 through 5 **characterised in that** individual cylinders (1) are targetedly shut down by the control, wherein the cylinders (1) which are not shut down deliver the desired power and/or make available the desired torque and/or the desired rotary speed of the internal combustion engine.

**7.** A method as set forth in claim 6 **characterised in that** individual cylinders (1) are shut down upon a power demand in respect of the internal combustion engine in the region of between 0% and 30% of the nominal power of the internal combustion engine.

**8.** A method as set forth in claim 6 or claim 7 **characterised in that** individual cylinders (1) are selectively shut down or switched on upon a reduction or increase in the load by more than 25% of the nominal load per combustion cycle.

**9.** A method as set forth in one of claims 1 through 8 **characterised in that** for functional monitoring of a cylinder (1) the fuel supply is shut down for one or more combustion cycles, preferably between one and two combustion cycles, and the time variation occurring **in that** situation in respect of the cylinder pressure is ascertained.

**10.** A method as set forth in one of claims 1 through 9 **characterised in that** for functional monitoring of a valve of a cylinder (1) the fuel supply is shut down for one or more combustion cycles, preferably between one and two combustion cycles, wherein the compression curve is detected and possible valve damage or valve wear is detected therefrom.

**11.** A method as set forth in one of claims 1 through 10 **characterised in that** the respective combustion processes of the at least two cylinders (1) are monitored by a cylinder sensor means, preferably cylinder pressure indication means.

**12.** A method as set forth in one of claims 1 through 11 **characterised in that** the at least two cylinders (1) are operated with different fuels.

**13.** An internal combustion engine, preferably a stationary gas engine, comprising

- at least two cylinders (1),
- at least one introduction device (4) per cylinder for introducing fuel or a fuel/air mixture into the cylinder (1),
- a control or regulating device (3) for controlling or regulating at least one of the following weighted values of the internal combustion engine: power, torque, rotary speed,

wherein for each cylinder (1) is at least one cylinder pressure sensor (2) whose signals is fed to the control or regulating device (3) and wherein each of the at least one introduction devices (4) per cylinder (1) is actuated by the control or regulating device (3) for controlling or regulating the desired value, wherein the internal combustion engine is designed without a throttle flap, with at least one turbocharger compressor bypass and/or at least one turbocharger turbine wastegate and/or a variable valve control means and/or a variable turbine geometry and/or a variable compressor geometry, **characterised in that** the control or regulating device (3) is configured for

- regulation of the amount of fuel per cylinder (1) is effected in a first regulating cycle in the region of between about 2 and 100 combustion cycles, and
- in a second regulating cycle in the region of between about 10 and 1000 combustion cycles regulation is effected by the amount of fuel being adjusted in tracking relationship with the regulated amount of charging air, and
- in a third regulating cycle in the region of between about 100 and 10,000 combustion cycles regulation of the fuel supply pressure is effected per cylinder (1).

**14.** An internal combustion engine as set forth in claim 13 **characterised in that** there is provided an air compressor communicating with the at least two cylinders (1).

**Revendications**

**1.** Procédé destiné à faire fonctionner un moteur à combustion interne disposant d'au moins deux cylindres (1), en particulier un moteur à gaz, dans lequel, en fonction d'une puissance souhaitée et/ou d'un couple souhaité et/ou d'une vitesse de rotation souhaitée du moteur à combustion interne, la quantité de combustible acheminée jusqu'à chacun des au moins deux cylindres (1) est commandée ou régulée individuellement par cylindre à l'aide d'un équipement de dosage de combustible et d'un capteur de pression de cylindre (2), **caractérisé en ce que**

- dans un premier cycle de régulation dans la plage d'environ 2 à 100 cycles de combustion est effectuée une régulation de la quantité de combustible par cylindre (1), et
- dans un deuxième cycle de régulation dans la plage d'environ 10 à 1 000 cycles de combustion est effectuée une régulation en adaptant la quantité de combustible à une quantité d'air d'admission régulée, et
- dans un troisième cycle de régulation dans la plage d'environ 100 à 10 000 cycles de combustion est effectuée une régulation de la pression d'alimentation de combustible par cylindre (1).

**2.** Procédé selon la revendication 1, **caractérisé en ce qu'**à chacun des au moins deux cylindres (1) sont acheminés un air comprimé et un combustible, de préférence un gaz propulseur, respectivement de façon séparée.

**3.** Procédé selon la revendication 1 ou 2, **caractérisé en ce qu'**en tant que grandeur de référence pour commander ou réguler la puissance et/ou le couple et/ou la vitesse de rotation du moteur à combustion interne est utilisée la pression dans chacun des cylindres (1).

**4.** Procédé selon l'une des revendications 1 à 3, **caractérisé en ce que** la quantité de combustible acheminée jusqu'à chacun des au moins deux cylindres (1) est déterminée par la durée d'ouverture et/ou par la pression d'alimentation de combustible et/ou par la section d'ouverture du dispositif d'introduction (4) respectif.

**5.** Procédé selon l'une des revendications 1 à 4, **caractérisé en ce qu'**une synchronisation des cylindres est effectuée via une commande ou une régulation individuellement par cylindre de la cadence d'allumage et/ou la durée d'ouverture et/ou la pression d'alimentation de combustible du dispositif d'introduction (4) respectif pour le combustible, dans lequel de préférence les cylindres (1) sont synchronisés en fonction de la pression de cylindre respective, de préférence de la pression de la pointe de cylindre ou de grandeurs dérivées de celle-ci par rapport à la puissance donnée par les cylindres (1) et/ou aux émissions, de préférence des émissions de NOx.

6. Procédé selon l'une des revendications 1 à 5, **caractérisé en ce que** par le biais de la commande des cylindres (1) sont débranchés de façon ciblée, dans lequel les cylindres (1) non débranchés donnent la puissance souhaitée et/ou fournissent le couple souhaité et/ou la vitesse de rotation souhaitée du moteur à combustion interne.

7. Procédé selon la revendication 6, **caractérisé en ce que** des cylindres (1) individuels sont débranchés lors d'une exigence de puissance du moteur à combustion interne dans la plage de 0 % à 30 % de la puissance nominale du moteur à combustion interne.

8. Procédé selon la revendication 6 ou 7, **caractérisé en ce que** des cylindres (1) individuels sont sélectivement débranchés ou branchés lors d'une réduction ou d'une augmentation de la charge de plus de 25 % de la charge nominale par cycle de combustion.

9. Procédé selon l'une des revendications 1 à 8, **caractérisé en ce que** pour la surveillance du fonctionnement d'un cylindre (1), l'alimentation de combustible pour un ou plusieurs cycles de combustion, de préférence un à deux cycles de combustion, est débranchée et ce faisant, la variation dans le temps de la pression de cylindre en découlant est établie.

10. Procédé selon l'une des revendications 1 à 9, **caractérisé en ce que** pour la surveillance du fonctionnement d'une valve d'un cylindre (1), l'alimentation de combustible pour un ou plusieurs cycles de combustion, de préférence un à deux cycles de combustion, est débranchée, dans lequel la courbe de compression est saisie et à partir de là un éventuel dommage de valve ou une éventuelle usure de valve est détecté(e).

11. Procédé selon l'une des revendications 1 à 10, **caractérisé en ce que** les processus de combustion respectifs des au moins deux cylindres (1) sont surveillés par un capteur de cylindre, de préférence une indexation de pression de cylindre.

12. Procédé selon l'une des revendications 1 à 11, **caractérisé en ce que** les au moins deux cylindres (1) sont exploités avec des combustibles différents.

13. Moteur à combustion interne, en particulier un moteur à gaz stationnaire, avec :

- au moins deux cylindres (1),
- au moins un dispositif d'introduction (4) par cylindre (1), pour introduire un combustible ou un mélange combustible/air jusque dans le cylindre (1), dans lequel de préférence le au moins un dispositif d'introduction (4) par cylindre (1) est conçu en tant qu'équipement de port-injection, et
- un équipement de commande ou de régulation (3) pour commander ou réguler au moins une des grandeurs souhaitées suivantes du moteur à combustion interne : puissance, couple, vitesse de rotation,

dans lequel par cylindre (1) est prévu au moins un capteur de pression de cylindre (2) dont les signaux sont acheminés vers l'équipement de commande ou de régulation (3), et

dans lequel chacun des au moins un dispositif d'introduction (4) par cylindre (1) sont commandés par l'équipement de commande ou de régulation (3) pour commander ou réguler la grandeur souhaitée,

dans lequel le moteur à combustion interne est conçu sans papillon, avec au moins un bypass de turbocompresseur et/ou au moins une valve de dérivation de turbine de turbocompresseur et/ou une commande de valve variable et/ou une turbine à géométrie variable et/ou un compresseur à géométrie variable, **caractérisé en ce que** l'équipement de commande ou de régulation (3) est configuré pour

- dans un premier cycle de régulation dans la plage d'environ 2 à 100 cycles de combustion effectuer une régulation de la quantité de combustible par cylindre (1), et
- dans un deuxième cycle de régulation dans la plage d'environ 10 à 1 000 cycles de combustion effectuer une régulation en adaptant la quantité de combustible à une quantité d'air d'admission régulée, et
- dans un troisième cycle de régulation dans la plage d'environ 100 à 10 000 cycles de combustion effectuer une régulation de la pression d'alimentation de combustible par cylindre (1).

14. Moteur à combustion interne selon la revendication 13, **caractérisé en ce qu'**un compresseur d'air est prévu qui est en relation avec les au moins deux cylindres (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19621297 C1
- EP 1688601 A2
- DE 102006024956 B4
- DE 102007000443 A1
- JP 2005069097 A
- DE 19814643 A1
- EP 2136059 A1